(19) Europäisches Patentamt
European Patent Office
Office européen des brevets

(11) **EP 3 742 445 A1**

(12) **EUROPEAN PATENT APPLICATION**
published in accordance with Art. 153(4) EPC

(43) Date of publication:
**25.11.2020 Bulletin 2020/48**

(51) Int Cl.:
***G11B 5/738*** *(2006.01)*     ***G11B 5/78*** *(2006.01)*

(21) Application number: **18908453.6**

(22) Date of filing: **19.11.2018**

(86) International application number:
**PCT/JP2018/042737**

(87) International publication number:
**WO 2019/171665 (12.09.2019 Gazette 2019/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.03.2018 JP 2018043592**

(71) Applicant: **Sony Corporation**
**108-0075 Tokyo (JP)**

(72) Inventors:
• **HASHIMOTO Kazuya**
**Tokyo 108-0075 (JP)**

• **IWAMA Takanobu**
**Tokyo 108-0075 (JP)**
• **KOBAYASHI Hiroyuki**
**Tagajyo-shi, Miyagi 985-0842 (JP)**
• **HIRATSUKA Ryoichi**
**Tokyo 108-0075 (JP)**
• **KANEMAKI Yoichi**
**Tokyo 108-0075 (JP)**
• **TERUI Hikaru**
**Tokyo 108-0075 (JP)**

(74) Representative: **D Young & Co LLP**
**120 Holborn**
**London EC1N 2DY (GB)**

(54) **MAGNETIC RECORDING TAPE, PRODUCTION METHOD THEREFOR, AND MAGNETIC RECORDING TAPE CARTRIDGE**

(57)     To provide a magnetic recording tape that exhibits excellent tape dimension stability even if there are changes in temperature or humidity or even if tension is applied to the magnetic recording tape during tape travelling.

The present technology provides a magnetic recording tape, the tape (T1 or T2) having a total thickness of 5.6 $\mu$m or less and including a magnetic layer 1, a non-magnetic layer 2, a base layer 3, and a back layer 4 in the stated order. In one embodiment, a deposition film layer A formed of a metal or an oxide thereof is provided on a lower-layer side of the non-magnetic layer 2. The deposition film layer A may be provided on the back layer 4 and an insulation layer B may also be provided between the deposition film layer A the non-magnetic layer 2.

(Top)

T 1
1 : Magnetic layer
2 : Non-magnetic layer
3 : Base layer
A : Deposition film layer
4 : Back layer

(Bottom)

FIG.1

EP 3 742 445 A1

**Description**

Technical Field

The present technology relates to a magnetic recording tape and the like. More specifically, the present technology relates to a magnetic recording tape capable of suppressing deformation (dimensional change) due to an environmental factor of the magnetic recording tape, or the like and preventing an off-track phenomenon from occurring, a tape cartridge in which the tape is housed, and a method of producing the tape.

Background Art

In recent years, the amount of information to be recorded for a long term has explosively increased due to the spread of the Internet, cloud computing, and the progress of accumulation and analysis of big data. For this reason, a recording medium for backing up a large amount of information as data or archiving such information is desired to have a higher recording capacity. Among such recording media, a "magnetic recording tape" (abbreviated as "tape" in some cases) has attracted attention again from the viewpoint of cost, energy saving, long lifetime, reliability, capacity, and the like.

This magnetic recording tape is a long tape including a magnetic layer and is housed in a case while being wound on a reel. In this magnetic recording tape, recording or reproduction is performed using a magnetoresistive head (hereinafter, magnetic head) in the direction in which the tape is caused to travel. In 2000, the open standard LTO (Linear-Tape-Open) has appeared, and after that, the generation thereof have been updated to the present.

The recording capacity of the magnetic recording tape depends on the surface area (tape length × tape length) of the magnetic recording tape and the recording density of the tape per unit area. The recording density depends on the track density in the tape width direction and the linear recording density (recording density in the tape longitudinal direction). That is, increasing the recording capacity of the magnetic recording tape depends on how the tape length, the track density, and the like can be increased. Note that it is difficult to change the tape width due to the standard.

In the case the above-mentioned track density is increased, it is a more important issue to prevent an off-track phenomenon when the magnetic recording tape is caused to travel at high speed from occurring. This off-track phenomenon is a phenomenon in which a target track is not present at a track position to be read by the magnetic head or a wrong track position is read.

Here, in the case where the tape becomes longer and the tape thickness becomes further thinner due to the increase in recording capacity of the tape, deformation (extension) in the track width direction (tape width direction) due to a tension factor during tape travelling and an environmental factor such as humidity and temperature is more likely to occur. In the case where the tape is deformed, the travelling property of the tape is reduced and spacing occurs between the magnetic head and the tape, which largely deteriorates the recording/reproduction characteristics of the tape.

Patent Literature 1 discloses a magnetic recording medium including a non-magnetic metal layer or a metal oxide layer provided on the surface of a polyester film to a digital recording signal is favorably reproduced even if the magnetic recording medium is preserved for a long time under high temperature and high humidity. Further, it is disclosed that the metal layer and the metal oxide layer can be formed by vacuum deposition, sputtering, ion plating, or the like.

Citation List

Patent Literature

Patent Literature 1: Japanese Patent Application Laid-open No. 1999-339250.

Disclosure of Invention

Technical Problem

The present technology solves the problem relating to a magnetic recording tape having the reduced thickness in order to prolong the length of the tape for the purpose of increasing the recording capacity per roll of the tape product. Specifically, it is a main object of the present technology to provide a magnetic recording tape and the like capable of effectively suppressing or preventing the change in tape dimension, particularly, dimensional change in the tape width direction, even in the case where tension is applied during tape travelling or there is a change in surrounding environment such as a change in temperature and/or humidity.

Solution to Problem

In order to achieve the above-mentioned object, the present inventors provide, regarding a magnetic recording tape having the reduced thickness so that the total thickness of the tape is 5.6 $\mu$m or less, a magnetic recording tape having a layer structure including a magnetic layer, a non-magnetic layer, a base layer, and a back layer in the stated order from a side facing a magnetic head during signal recording or reproduction, in which a deposition film layer formed of a metal or an oxide thereof is provided on a lower-layer side of the non-magnetic layer, a Young's modulus in a longitudinal direction (tape longitudinal direction) of the tape is 14 GPa or more, and a Young's modulus in the tape width direction is 15 GPa or more. In the present technology, the deposition film layer may be interposed between the base layer and the back layer, or interposed between the base layer and the non-magnetic layer.

Further, the present technology provides, regarding the magnetic recording tape having the total thickness of 5.6 $\mu$m or less similarly to the above, a method of producing a magnetic recording tape, including: obtaining a magnetic recording tape by performing at least a step of forming at least a magnetic layer on one surface side of a base layer, and a reinforcement-film-forming-step of forming a deposition film layer on a lower-layer side of the magnetic layer, the deposition film layer being formed of a metal or an oxide thereof and having a film thickness in a predetermined range, the magnetic recording tape having Young's moduli similar to those in the above.

Advantageous Effects of Invention

In accordance with the present technology, it is possible to effectively suppress the dimensional change of the tape, particularly, the dimensional change in the tape width direction.

Brief Description of Drawings

[Fig. 1] Fig. 1 is a diagram showing a basic layer structure of a first embodiment example of a magnetic recording tape according to the present technology.
[Fig. 2] Fig. 2 is a diagram showing a basic layer structure of a second embodiment example of the tape.
[Fig. 3] Fig. 3 is a flow chart of a production step in the case of a tape T1 (first embodiment example).
[Fig. 4] Fig. 4 is a flow chart of a production step in the case of a tape T2 (second embodiment example).
[Fig. 5] Fig. 5 is a diagram showing an embodiment example of a magnetic recording tape cartridge according to the present technology.

Mode(s) for Carrying Out the Invention

Hereinafter, favorable embodiments for carrying out the present technology will be described with reference to the drawings. Note that since the embodiments described below exemplify favorable embodiments and modified embodiments of the present technology, the present technology is not narrowly limited thereto and various modifications based on the technical idea of the present technology can be made. For example, the configurations, the methods, the steps, the shapes, the materials, and the numerical values cited in the following embodiments and modified examples thereof are only illustrative, and different configurations, methods, steps, shapes, materials, and numerical values may be used as necessary. Further, in the case where a chemical formula of a compound or the like is described, this chemical formula is a typical one and does not necessarily need to have the described valence or the like as long as it is a general name of the same compound. Also, the configurations, the methods, the steps, the shapes, the materials, and the numerical values described below can be combined without departing from the essence of the present technology. The description will be made in the following order.
(1) Regarding basic layer structure of magnetic recording tape as first embodiment example according to present technology
(2) Configuration of each layer of first embodiment example

(2-1) Magnetic layer
(2-2) Non-magnetic layer
(2-3) Base layer
(2-4) Deposition film layer
(2-5) Back layer

(3) Regarding basic layer structure of magnetic recording tape as second embodiment
(3-1) Insulation layer
(4) Regarding one example of method of producing magnetic recording tape according to present technology

(4-1) Coating material preparation step
(4-2) Deposition-film-layer-forming-step
(4-3) Coating step
(4-4) Orientation step
(4-5) Calendar step
(4-6) Cutting step
(4-7) Incorporation step
(4-8) Inspection step
(4-9) Shipment

(1) Regarding basic layer structure of magnetic recording tape according to present technology

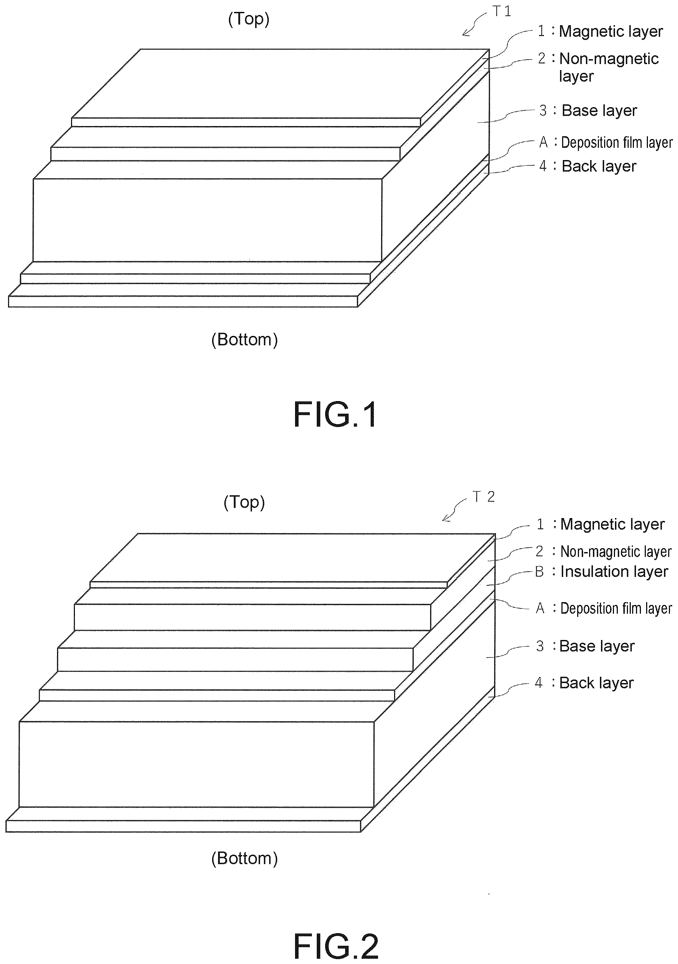

Fig. 1 is a diagram showing a basic layer structure of a first embodiment example of a magnetic recording tape according to the present technology. A reference symbol T1 shown in Fig. 1 indicates the magnetic recording tape (hereinafter, referred to as "tape T1") according to the first embodiment example. Note that the magnetic recording tape T1 according to the present technology may be one that is cased to travel at a high tape speed of, for example, 4 m/sec or more during recording or reproduction. That is, the magnetic recording tape T1 according to the present technology may be one that is used for recording or reproduction at the tape speed of 4 m/sec or more. In the case where such high speed travelling is performed, tension applied to the tape T1 increases.

The total thickness of the tape T1 is 5.6 $\mu$m or less from the viewpoint that the present technology targets a magnetic recording tape having a higher recording capacity. Then, the tape T1 includes a magnetic layer 1 having magnetism, a non-magnetic layer 2 located below the magnetic layer 1, a base layer 3 located below the non-magnetic layer 2, a deposition film layer A located below the base layer 3, and a back layer 4 that is located below the deposition film layer A and is the lowermost layer in the order from the top (from the side facing a magnetic head during recording or reproduction). That is, the tape T1 has a basic layer structure including a total of five layers. Note that in addition to these five layers, another necessary layer can be freely provided to an appropriate place as necessary, e.g., a protective film layer or a lubricant layer may be further stacked on the magnetic layer 1 or a layer such as an intermediate layer may be interposed between the magnetic layer 1 and the base layer 3. Note that in the description of the present technology, the perpendicular direction of the layer structure will be described with the magnetic layer 1 side as "top" and the back layer 4 side as "bottom" as shown in Fig. 1 or the like.

(2) Regarding configuration and role of each layer

(2-1) Magnetic layer

In the tape T1 having the above-mentioned basic layer structure, the magnetic layer 1 located on the surface layer functions as a signal recording layer. Note that in recent years, it becomes an important issue to increase the recording capacity of the tape T1. For this reason, it is desired to, for example, make the tape T1 thinner (reduce the tape total thickness) and increase the tape length per roll of the tape cartridge product to increase the recording area (recording capacity). Note that in the following description of the present technology, the configuration common to the tape T2 regarding the description of the tape T1 (Fig. 1) is also applied to the tape T2 (Fig. 2).

The favorable range of the thickness of the magnetic layer 1 is 20 nm to 100 nm. The lower limit thickness of 20 nm is the limit thickness at which the magnetic layer 1 can be uniformly and stably coated, and a thickness exceeding the upper limit thickness of 100 nm causes a problem from the viewpoint of setting the bit length of the high recording density tape.

The average thickness of the magnetic layer 1 can be obtained as follows. First, the tape T1 is thinly processed perpendicularly to the main surface thereof to prepare a test piece, and the cross section of the test piece is observed with a transmission electron Microscope (TEM). The apparatus and the observation conditions are as follows, i.e., apparatus: TEM (H9000NAR manufactured by Hitachi, Ltd.), acceleration voltage: 300kV, and magnification: 100,000 times.

Next, after the thickness of the magnetic layer 1 is measured at at least 10 or more points in the longitudinal direction of the tape T1 by using the obtained TEM image, the measured values are simply averaged (arithmetic average) to obtain the average thickness of the magnetic layer 1. Note that the measurement positions are randomly selected from the test piece.

The magnetic layer 1 favorably includes a plurality of servo bands and a plurality of data bands in advance. The plurality of servo bands is provided in the width direction of the tape T1 at equal intervals. A data band is provided between adjacent servo bands. A servo signal for performing tracking control of the magnetic head is written to the servo band in advance. User data is recorded on the data band. The number of servo bands is favorably five or more, more favorably 5+4n (however, n is a positive integer.). In the case where the number of servo bands is five or more, the influence on the servo signal due to the dimensional change in the width direction of the tape T1 is suppressed and stable recording/reproduction characteristics with less off-track can be secured. The track density of the magnetic layer 1 is high, i.e., 10,000 track/in. or more in the tape width direction.

The magnetic layer 1 contains at least a magnetic powder (powdered magnetic particles), and this magnetic powder is longitudinally oriented (in-plane orientation) or perpendicularly oriented. A signal is recorded on the magnetic layer 1 by using a well-known in-plane magnetic recording method (method in which the orientation of magnetization is the tape longitudinal direction) or a well-known perpendicular magnetic recording method (method in which the orientation of magnetization is the perpendicular direction) to change the magnetism by magnetization.

The degree of perpendicular orientation in the tape perpendicular direction of the magnetic layer 1 is favorably 60% or more, more favorably 65% or more. Further, the ratio of the degree of perpendicular orientation in the tape perpendicular direction to the degree of orientation in the tape longitudinal direction of the magnetic layer 1 is, for example, 1.5 or more, favorably 1.8 or more, and still more favorably 1.85 or more. The magnetic recording tape having the degree of perpendicular orientation within the above-mentioned numerical range and/or the ratio within the above-mentioned numerical range has higher reliability.

The degree of orientation of the magnetic layer 1 in the perpendicular direction may be measured as follows.

First, a measurement sample is cut out from the tape T1, and the M-H loop of the entire measurement sample is measured in the perpendicular direction (thickness direction) of the tape T1 by using VSM. Next, acetone, ethanol, or the like is used to wipe a coating film (the non-magnetic layer 2, the magnetic layer 1, and the back layer 3), thereby leaving the base layer 3 and the deposition film layer A to obtain a sample for background correction. The M-H loop of the sample for background correction is measured in the perpendicular direction (tape perpendicular direction) of the sample for background correction using VSM. After that, the M-H loop of the sample for background correction is subtracted from the M-H loop of the entire measurement sample to obtain the M-H loop after the background correction. A saturation magnetization Ms (emu) and a residual magnetization Mr (emu) of the obtained M-H loop are substituted into the following formula to calculate the degree of perpendicular orientation S1 (%). Note that the above-mentioned measurement of the M-H loop is performed at 25°C. Further, "demagnetizing field correction" when measuring the M-H loop in the perpendicular direction of the tape is not performed.

Degree of perpendicular orientation

$$S1(\%) = (Mr/Ms) \times 100$$

Further, the degree of orientation in the longitudinal direction is measured similarly to the degree of perpendicular orientation except that the M-H loop of the entire measurement sample and the M-H loop of the sample for background correction are measured in the longitudinal direction (travelling direction).

In the former in-plane magnetic recording method, for example, recording is performed in the tape longitudinal direction on the magnetic layer 1 containing a metal magnetic powder that exhibits a magnetizing function. In the latter perpendicular magnetic recording method, for example, magnetic recording is performed in the perpendicular direction of the tape T1 on the magnetic layer 1 containing BaFe (barium ferrite) magnetic powder or the like that exhibits a magnetizing function. Note that in the perpendicular magnetic recording, adjacent magnetic forces are enhanced with each other, the density can be increased, and the coercive force (Hc) that is a force for retaining the magnetic force is also high. In any case, signal recording is performed magnetizing the magnetic particles in the magnetic layer 1 by applying a magnetic field from the magnetic head.

Examples of the magnetic particles forming the magnetic powder of the magnetic layer 1 include, but particularly not narrowly limited to, epsilon type iron oxide (ε-iron oxide), gamma hematite, magnetite, chromium dioxide, cobalt-deposited iron oxide, hexagonal ferrite, barium ferrite (BaFe), Co ferrite, strontium ferrite, and metal. Note that the ε-iron oxide may contain any of Ga and Al. These magnetic particles are freely selected on the basis of the method of producing the magnetic layer 1, the tape standard, the function, or the like.

Note that the shape of the magnetic particles depends on the crystal structure of the magnetic particles. For example, BaFe has hexagonal plate shape, ε-iron oxide has a spherical shape or the like, cobalt ferrite has a cubic shape, and metal has a spindle shape. In the magnetic layer 1, these magnetic particles are oriented in the step of producing the tape T1. Note that BaFe has high reliability in data recording from the viewpoint that the coercive force does not decrease even in a high temperature and high humidity environment, and thus, can be one of the favorable magnetic materials also in the present technology.

As the magnetic powder, for example, a powder of nanoparticles (hereinafter, referred to as "ε-iron oxide particles".) containing ε-iron oxide can be used. The ε-iron oxide particles are capable of achieving a high coercive force even if the ε-iron oxide particles are fine particles. It is favorable that the ε-iron oxide contained in the ε-iron oxide particles is preferentially crystal-oriented in the thickness direction (perpendicular direction) of the tape T1.

The ε-iron oxide particles will be described in more detail. The ε-iron oxide particles have a spherical shape or substantially spherical shape, or a cubic shape or substantially cubic shape. Since the ε-iron oxide particles have the above-mentioned shape, in the case where the ε-iron oxide particles are used as the magnetic particles, there is an advantage that the contact area between particles in the thickness direction of the tape T1 can be reduced and aggregation of the particles can be suppressed as compared with the case where barium ferrite particles having a hexagonal plate shape are used as the magnetic particles. Therefore, it is possible to increase the dispersibility of the magnetic powder and achieve a more favorable SNR (Signal-to-Noise Ratio).

The ε-iron oxide particles have a core-shell structure. Specifically, the ε-iron oxide particles include a core portion and a shell portion that has a two-layer structure and is provided around the core portion. The shell portion having a two-layer structure includes a first shell portion provided on the core portion, and a second shell portion provided on the first shell portion. The core portion contains ε-iron oxides. The ε-iron oxide contained in the core portion favorably has $\varepsilon\text{-Fe}_2\text{O}_3$ crystals as a main phase, and more favorably has a single phase of $\varepsilon\text{-Fe}_2\text{O}_3$.

The first shell portion covers at least a part of the periphery of the core portion. Specifically, the first shell portion may partially cover the periphery of the core portion, or may cover the entire periphery of the core portion. From the viewpoint of making the exchange coupling between the core portion and the first shell portion sufficient and improving the magnetic properties, it is favorable to cover the entire surface of the core portion.

The first shell portion is a so-called soft magnetic layer, and contains, for example, a soft magnetic material such as $\alpha$-Fe, Ni-Fe alloy, or Fe-Si-Al alloy. $\alpha$-Fe may be obtained by reducing the ε-iron oxide contained in the core portion. The second shell portion is an oxide coating film as an oxidation prevention layer. The second shell portion contains $\alpha$-iron oxide, aluminum oxide, or silicon oxide. The $\alpha$-iron oxide contains, for example, at least one iron oxide selected from $\text{Fe}_3\text{O}_4$, $\text{Fe}_2\text{O}_3$, and FeO. In the case where the first shell portion contains $\alpha$-Fe (soft magnetic material), the $\alpha$-iron oxide may be obtained by oxidizing $\alpha$-Fe contained in the first shell portion.

Since the ε-iron oxide particles includes the first shell portion as described above, it is possible to adjust the coercive force of the entire ε-iron oxide particles (core-shell particles) to the coercive force (Hc) suitable for recording while maintaining the coercive force (Hc) of the core portion alone at a large value to ensure thermal stability.

Further, since the ε-iron oxide particles include the second shell portion as described above, it is possible to prevent the characteristics of the ε-iron oxide particles from being deteriorated due to the ε-iron oxide particles being exposed to the air and causing rust or the like on the particle surfaces during or before the step of producing the tape T1. Therefore, it is possible to suppress the deterioration of the characteristics of the tape T1.

Although the case where the ε-iron oxide particles include a shell portion having a two-layer structure has been described, the ε-iron oxide particles may include a shell portion having a single-layer structure. In this case, the shell portion has a configuration similar to that of the first shell portion. However, from the viewpoint of suppressing the deterioration of the characteristics of the ε-iron oxide particles, it is favorable that the ε-iron oxide particles include a shell portion having a two-layer structure as in the above-mentioned embodiment.

In the above, an additive may be contained instead of the core-shell structure of the ε-iron oxide particles, or an additive may be contained while having the core-shell structure. In this case, some Fe of the ε-iron oxide particles are substituted by the additives. Also in the case where the ε-iron oxide particles contain an additive, the coercive force (Hc) of the entire ε-iron oxide particles can be adjusted to the coercive force (Hc) suitable for recording, and thus, it is possible to improve the ease of recording. The additive is a metal element other than iron, favorably, a trivalent metal element, more favorably at least one of Al, Ga, or In, and still more favorably at least one of Al or Ga.

Specifically, the ε-iron oxide containing an additive is $\varepsilon\text{-Fe}_{2-x}\text{M}_x\text{O}_3$ crystal (however, M is a metal element other than iron, favorably a trivalent metal element, more favorably at least one of Al, Ga, or In, and still more favorably at least one of Al or Ga. x satisfies the relationship of, for example, $0<x<1$.).

As the magnetic powder, a powder of nanoparticles containing hexagonal ferrite (hereinafter, referred to as "hexagonal ferrite particles".) may be used. The hexagonal ferrite particles have, for example, a hexagonal plate shape or a substantially hexagonal plate shape. The hexagonal ferrite favorably contains at least one of Ba, Sr, Pb, or Ca, more favorably at least one of Ba or Sr.

The hexagonal ferrite may specifically be, for example, barium ferrite or strontium ferrite. Barium ferrite may further contain at least one of Sr, Pb, or Ca, in addition to Ba. Strontium ferrite may further contain at least one of Ba, Pb, or Ca, in addition to Sr.

More specifically, hexagonal ferrite has an average composition represented by the general formula $MFe_{12}O_{19}$. However, M is, for example, at least one metal selected from Ba, Sr, Pb, and Ca, favorably at least one metal selected from Ba and Sr. M may be a combination of Ba and one or more metals selected from the group consisting of Sr, Pb, and Ca. Further, M may be a combination of Sr and one or more metals selected from the group consisting of Ba, Pb, and Ca. In the above-mentioned general formula, some Fe may be substituted by other meatal elements.

In the case where the magnetic powder contains a powder of hexagonal ferrite particles, the average particle size of the magnetic powder is favorably 50 nm or less, more favorably 10 nm or more and 40 nm or less, and still more favorably 15 nm or more and 30 nm or less.

As the magnetic powder, a powder of nanoparticles (hereinafter, referred to as "cobalt ferrite particles".) containing Co-containing spinel ferrite may be used. The cobalt ferrite particles favorably have uniaxial anisotropy. The cobalt ferrite particles have, for example, a cubic shape or a substantially cubic shape. The Co-containing spinel ferrite may further contain at least one of Ni, Mn, Al, Cu, or Zn, in addition to Co.

The Co-containing spinel ferrite has, for example, the average composition represented by the following formula (1).

$$Co_xM_yFe_2O_Z \qquad (1)$$

(However, in the formula (1), M is, for example, at least one metal of Ni, Mn, Al, Cu, and Zn. x is a value within the range of $0.4 \leq x \leq 1.0$. y is a value within the range of $0 \leq y \leq 0.3$. However, x and y satisfy the relationship of $(x+y) \leq 1.0$. z is a value within the range of $3 \leq z \leq 4$. Some Fe may be substituted with other metal elements.) In the case where the magnetic powder contains a powder of cobalt ferrite particles, the average particle size of the magnetic powder is favorably 25 nm or less, more favorably 23 nm or less.

Here, an average particle size D of the magnetic powder described above can be obtained as follows. First, the tape T1 to be measured is processed by an FIB (Focused Ion Beam) method or the like to prepare a slice, the cross section of the slice is observed by TEM. Next, 500 magnetic powders are randomly selected from the obtained TEM photograph, a maximum particle size $d_{max}$ of the respective particles is measured, and the particle size distribution of the maximum particle size $d_{max}$ of the magnetic powder is obtained. Here, "the maximum particle size $d_{max}$" means the so-called maximum Feret diameter, and specifically refers to the maximum distance between two parallel lines drawn from any angle so as to be in contact with the contour of the magnetic powder. After that, the median diameter (50% diameter, D50) of the maximum particle size $d_{max}$ is obtained from the obtained particle size distribution of the maximum particle size $d_{max}$, and this is used as the average particles size (average maximum particle size) D of the magnetic powder.

Here, the average aspect ratio of the magnetic powder is favorably 1 or more and 2.5 or less, more favorably 1 or more and 2.1 or less, and still more favorably 1 or more and 1.8 or less. In the case where the average aspect ratio of the magnetic powder is within the range of 1 or more and 2.5 or less, it is possible to not only suppress the aggregation of the magnetic powder but also suppress, when the magnetic powder is perpendicularly oriented in the step of forming the magnetic layer 1, the resistance applied to the magnetic powder. That is, it is possible to improve the perpendicular orientation of the magnetic powder.

The average aspect ratio of the magnetic powder can be obtained as follows. First, the tape T1 to be measured is processed by an FIB method or the like to prepare a slice, and the cross section of the slice is observed by TEM. Next, 50 magnetic powders oriented at an angle of 75 degrees or more with respect to the horizontal direction are randomly selected from the obtained TEM photograph, and a maximum plate thickness DA of each magnetic powder is measured. Subsequently, the measured maximum plate thicknesses DA of the 50 magnetic powders are simply averaged (arithmetic average) to obtained an average maximum plate thickness DAave. Next, the surface of the magnetic layer 1 of the tape T1 is observed by TEM. Next, 50 magnetic powders are randomly selected from the obtained TEM photograph, and a maximum plate diameter DB of each magnetic powder is measured. Here, the maximum plate diameter DB refers to the maximum distance (so-called maximum Feret diameter) between two parallel lines drawn from any angle so as to be in contact with the contour of the magnetic powder. Subsequently, the measured maximum plate diameters DB of the 50 magnetic powders are simply averaged (arithmetic average) to obtain an average maximum plate diameter DBave. Next, an average aspect ratio (DBave/DAave) of the magnetic powder is obtained from the average maximum plate thickness DAave and the average maximum plate diameter DBave.

Further, in addition to the magnetic powder, a non-magnetic powder is formulated in this magnetic layer 1 for the purpose of, for example, enhancing the strength and durability of the magnetic layer 1. The additive includes, for example, a binder and a lubricant, and may further include a dispersant, conductive particles, an abrasive, a rust inhibitor, and the like as necessary. This magnetic layer 1 may be provided with a large number of holes (not shown) for storing the lubricant. The large number of holes favorably extend in the direction perpendicular to the surface of the magnetic layer 1.

This magnetic layer 1 is prepared as a magnetic coating material in which the magnetic powder and these selected additives have been formulated, and is formed by coating on the lower layer. Alternatively, the magnetic layer 1 may be formed by a sputtering method or a vapor deposition method.

As the above-mentioned binder to be formulated in the magnetic layer 1, a resin having a structure in which a crosslinking reaction is imparted to a polyurethane resin, a vinyl chloride resin, or the like is favorable. However, the binder is not limited thereto, and another resin may be appropriately formulated in accordance with the physical properties required for the tape T1, or the like. The resin to be formulated is typically not particularly limited as long as it is a resin generally used in the coating-type tape T1.

Examples of the resin include polyvinyl chloride, polyvinyl acetate, a vinyl chloride-vinyl acetate copolymer, a vinyl chloride-vinylidene chloride copolymer, a vinyl chloride-acrylonitrile copolymer, an acrylic ester-acrylonitrile copolymer, an acrylic ester-vinyl chloride-vinylidene chloride copolymer, a vinyl chloride-acrylonitrile copolymer, an acrylic ester-acrylonitrile copolymer, an acrylic ester-vinylidene chloride copolymer, a methacrylic acid ester-vinylidene chloride copolymer, a methacrylic acid ester-vinyl chloride copolymer, a methacrylic acid ester-ethylene copolymer, polyvinyl fluoride, a vinylidene chloride-acrylonitrile copolymer, an acrylonitrile-butadiene copolymer, a polyamide resin, polyvinyl butyral, a cellulose derivative (cellulose acetate butyrate, cellulose diacetate, cellulose triacetate, cellulose propionate, and nitrocellulose), a styrene butadiene copolymer, a polyester resin, an amino resin, and synthetic rubber. Further, examples of the thermosetting resin or the reactive resin include a phenol resin, an epoxy resin, a urea resin, a melamine resin, an alkyd resin, a silicone resin, a polyamine resin, and a urea formaldehyde resin.

Further, a polar functional group such as $-SO_3M$, $-OSO_3M$, $-COOM$, and $P=O(OM)_2$ may be introduced into the above-mentioned binders for the purpose of improving dispersibility of the magnetic powder. Here, M in the formula is a hydrogen atom, an alkali metal such as lithium, potassium, and sodium. Further, examples of the polar functional group include a side chain type one having a terminal group of $-NR1R2$ and $-NR1R2R3^+X^-$, and a main chain type one having $>NR1R2^+X^-$. Here, R1, R2, and R3 in the formula are each a hydrogen atom or a hydrocarbon group, and $X^-$ is a halogen element such as fluorine, chlorine, bromine, and iodine, or an inorganic or organic ion. Further, examples of the polar functional group include $-OH$, $-SH$, $-CN$, and an epoxy group.

The magnetic layer 1 may further contain, as non-magnetic reinforcing particles, aluminum oxide ($\alpha$, $\beta$, or $\gamma$ alumina), chromium oxide, silicon oxide, diamond, garnet, emery, boron nitride, titanium carbide, silicon carbide, titanium carbide, titanium oxide (rutile-type, or anatase-type titanium oxide), or the like.

The lubricant of the magnetic layer 1 favorably contains a compound represented by the following general formula (2) and a compound represented by the following general formula (3). In the case where the lubricant contains these compounds, it is possible to particularly reduce the dynamic friction coefficient of the surface of the magnetic layer 1. Therefore, it is possible to further improve the travelling property of the tape T.

$$CH_3(CH_2)_nCOOH \qquad (2)$$

(However, in the general formula (1), n is an integer selected from the range of 14 or more and 22 or less.)

$$CH_3(CH_2)_pCOO(CH_2)_qCH_3 \qquad (3)$$

(However, in the general formula (2), p is an integer selected from the range of 14 or more and 22 or less and q is an integer selected from the range of 2 or more and 5 or less.)

The dynamic friction coefficient of the tape T1 is an important factor in relation to the stable travelling of the tape T1. In the case where a ratio ($\mu_B/\mu_A$) of a dynamic friction coefficient $\mu_B$ between the surface of the magnetic layer 1 and a magnetic head H when the tension applied to the tape T1 is 0.4 N to a dynamic friction coefficient $\mu_A$ between the surface of the magnetic layer 1 and the magnetic head H when the tension applied to the tape T1 is 1.2 N is favorably 1.0 or more and 2.0 or less, the change in the dynamic friction coefficient due to the tension fluctuation during travelling can be reduced, and thus, it is possible to stabilize the travelling of the tape.

Regarding the dynamic friction coefficient $\mu_A$ between the surface of the magnetic layer 1 and the magnetic head when the tension applied to the tape T1 is 0.6, a ratio ($\mu_{1000}/\mu_5$) of a value $\mu_{1000}$ of 1000th travelling to a value $\mu_5$ of fifth travelling is favorably 1.0 or more and 2.0 or less, and more favorably 1.0 or more and 1.7 or less. In the case where the ratio ($\mu_B/\mu_A$) is 1.0 or more and 2.0 or less, the change in the dynamic friction coefficient due to a large number of travelling can be reduced, and thus, it is possible to stabilize the travelling of the tape.

(2-2) Non-magnetic layer

Next, the non-magnetic layer 2 (see Fig. 1) provided below the magnetic layer 1 is referred to also as the intermediate layer or the underlayer in some cases. This non-magnetic layer 2 is a layer provided for the purpose of, for example, keeping, in the magnetic layer 1, the action of the magnetic force on the magnetic layer 1, ensuring the flatness required for the magnetic layer 1, or improving the orientation properties of the magnetic layer 1. Further, this non-magnetic layer 2 also plays a role of holding the lubricant added to the magnetic layer 1 or the lubricant added to the non-magnetic layer 2 itself.

This non-magnetic layer 2 can be formed by, for example, coating on the "base layer 3" described below. This non-magnetic layer 2 may have a multi-layer structure depending on the purpose or as necessary. It is important to use a non-magnetic material for this non-magnetic layer 2. This is because if a layer other than the magnetic layer 1 is magnetized, the layer becomes a source of noise.

This non-magnetic layer 2 is a non-magnetic layer containing a non-magnetic powder and a binder. The non-magnetic layer 2 may further contain, as necessary, at least one additive selected from a binder, a lubricant, conductive particles, a curing agent, a rust inhibitor, and the like. The binder used for the non-magnetic layer 2 is similar to that in the above-mentioned magnetic layer 1.

The non-magnetic powder contains, for example, at least one of inorganic particles or organic particles, and one type of non-magnetic powder may be used alone or two or more types of non-magnetic powders may be used in combination. The inorganic particles include, for example, a metal, a metal oxide, a metal carbonate, a metal sulfate, a metal nitride, a metal carbide, or a metal sulfide. As an example, iron oxyhydroxide, hematite, titanium oxide, carbon rack, or the like can be used. Examples of the shape of the non-magnetic powder include, but not particularly limited to, various shapes such as a needle shape, a spherical shape, a cubic shape, and a plate shape.

The average thickness of this non-magnetic layer 2 is favorably 0.8 $\mu$m or more and 2.0 $\mu$m or less, and more favorably 0.6 $\mu$m or more and 1.4 $\mu$m or less. The average thickness of the non-magnetic layer 2 is obtained in a way similar to that of the average thickness of the magnetic layer 1. However, the magnification of the TEM image is appropriately adjusted in accordance with the thickness of the non-magnetic layer 2. In the case where the average thickness of the magnetic layer 2 is less than 0.6 $\mu$m, the function of holding the additive (e.g., lubricant) formulated in the magnetic layer 1 or the non-magnetic layer 2 itself is lost. Meanwhile, in the case where the average thickness of the magnetic layer 2 exceeds 2.0 $\mu$m, the total thickness of the tape T1 becomes excessive, which goes against the trend of pursuing a higher recording capacity by thinning the tape T1.

(2-3) Base layer

Next, the base layer 3 shown in Fig. 1 or the like mainly functions as a base layer of the tape T1. The base layer 3 is referred to also as the base film layer, the substrate, or the non-magnetic support in some cases. The base layer 3 mainly functions as a non-magnetic support for supporting the non-magnetic layer 2, the magnetic layer 1 above the magnetic layer 2, and the like, and imparts rigidity to the entire tape T1. The base layer 3 has a long film shape having flexibility.

The upper limit of the average thickness of the base layer 3 is favorably less than 4.5 $\mu$m, more favorably 4.2 $\mu$m or less, more favorably 3.6 $\mu$m or less, and still more favorably 3.3 $\mu$m or less. The upper limit of the average thickness of the base layer 3 is 3.6 $\mu$m or less. As the base layer 3 becomes thinner, the total thickness of the tape also becomes thinner, so that the recording capacity in one cartridge product can be increased as compared with a general magnetic recording medium. Note that the lower limit of the thickness of the base layer 3 is determined from the viewpoint of the film deposition limit or the function of the base layer 3.

The average thickness of the base layer 3 can be obtained as follows. First, the tape T1 having a 1/2 inch width is prepared and cut into a length of 250 mm to prepare a sample. Subsequently, layers other than the base layer 3 of the sample is removed with a solvent such as MEK (methyl ethyl ketone) and dilute hydrochloric acid. Next, the thickness of the sample (base layer 3) is measured at five or more points using a laser hologage manufactured by Mitsutoyo Corporation, and the measured values are simply averaged (arithmetic average) to calculate the average thickness of the base layer 3. Note that the measurement position is randomly selected from the sample.

The base layer 3 contains, for example, at least one of polyesters, polyolefins, cellulose derivatives, vinyl resins, or different polymer resins. In the case where the base film layer 3 contains two or more of the above-mentioned materials, the two or more materials may be mixed, copolymerized, or laminated. The polyesters include, for example, at least one of PET (polyethylene terephthalate), PEN (polyethylene naphthalate), PBT (polybutylene terephthalate), PBN (polybutylene naphthalate), PCT (polycyclohexylene dimethylene terephthalate), PEB (polyethylene-p-oxybenzoate), or polyethylene bisphenoxycarboxylate. The polyolefins include, for example, at least one of PE (polyethylene) or PP (polypropylene). The cellulose derivatives include, for example, at least one of cellulose diacetate, cellulose triacetate, CAB (cellulose acetate butyrate), and CAP (cellulose acetate propionate). The vinyl resins include, for example, at least one of PVC (polyvinyl chloride) or PVDC (polyvinylidene chloride). The different polymer resins include, for example, at least one of PA (polyamide, nylon), aromatic PA (aromatic polyamide, aramid), PI (polyimide), aromatic PI (aromatic polyimide), PAI (polyamideimide), aromatic PAI (aromatic polyamideimide), PBO (polybenzoxazole, e.g., Zylon (registered trademark)), polyether, PEK (polyetherketone), polyetherester, PES (polyethersulfone), PEI (polyetherimide), PSF (Polysulfone), PPS (polyphenylene sulfide), PC (polycarbonate), PAR (polyarylate), and PU (polyurethane).

The material of the base layer 3 is not particularly narrowly limited but is determined by the standard of the magnetic recording tape in some cases. For example, PEN is specified in the LTO standard.

(2-4) Deposition film layer

The deposition film layer A shown in Fig. 1 and Fig. 2 functions as a reinforcement film layer for dramatically increasing the rigidity of the thinly formed tapes T1 and T2. More specifically, there is an increasing technical trend to make the track width of the magnetic layer 1 thinner to increase the track density in order to increase the recording density of the tapes T1 and T2 while reducing the thickness of the tape in order to make the tape length longer for the purpose of increasing the recording capacity of the tape per roll of a tape cartridge product.

As the thickness of the tape T1 is reduced, the tape dimension is likely to change due to the influence of the tension applied to the tape T1 during tape travelling or the change in environmental conditions during preservation or transportation. In particular, a dimensional change or deformation in the tape width direction easily causes a phenomenon in which the magnetic field from the magnetic head during recording or reproduction deviates from the track, i.e., a so-called "off-track phenomenon". The deposition film layer A plays a role of suppressing a dimensional change or deformation of the tape T1, preventing an off-track phenomenon from occurring, and preventing the SNR (signal-to-noise ratio) from being reduced.

Since the tape T1 includes this deposition film layer A, a dimensional change or deformation in the tape width direction can be suppressed even in the case where the tensile tension is applied during highspeed travelling of a tape travelling speed of 4 m/sec or more or even with a high-density configuration of 10,000 track/in. in the tape width direction, and thus, it is possible to effectively prevent an off-track phenomenon from occurring.

The deposition film layer A is formed of a metal material containing a metal or an oxide thereof. For example, any one of cobalt (Co), cobalt oxide (CoO), aluminum (Al), aluminum oxide ($Al_2O_3$), copper (Cu), copper oxide (CuO), chromium (Cr), silicon (Si), silicon dioxide ($SiO_2$), titanium (Ti), titanium oxide ($TiO_2$), nickel titanium (TiNi), cobalt chromium (CoCr), tungsten (W), and manganese (Mn) can be used, and Co, $Al_2O_3$, Si, Cu, or Cr can be favorably used.

The deposition film layer A can be formed by evaporating the metal material or the metal oxide material to deposit the material on the base layer 3. As the deposition method, an induction heating deposition method, a resistance heating deposition method, an electron beam deposition method, or the like can be adopted. Among them, the electron beam deposition method is favorable. The electron beam deposition method is favorable because it is possible to evaporate a refractory metal or a metal oxide having a high melting point, which is hard to evaporate, and heating and output can be instantaneously changed by the electron beam, so that more precise film thickness control can be performed. Further, in the case of the electron beam deposition method, a refractory material can be handled, and thus, it is possible to select a material having higher rigidity. Further, the electron beam deposition method is excellent in productivity because deposition can be efficiently performed.

The upper limit of the thickness of the deposition film layer A is favorably 600 nm or less, and more favorably 500 nm or less. In the case where the thickness exceeds 600 nm, particularly, 500 nm, it goes against the technical trend of reducing the total thickness of the tape T1 and deteriorates the productivity at the time of forming the deposition film layer A. Meanwhile, the lower limit of the thickness of the deposition film layer A may be as thin as possible on the condition that the deposition film layer A can function as a reinforcement film. For example, the film thickness of the deposition film layer A is favorably 350 nm.

Further, the ratio (thickness of the deposition film layer/thickness of the base layer) of the thickness of the deposition film layer A to the thickness of the base layer is favorably 9% or more, and more favorably 10% or more. As a result, it is possible to increase the dimension stability of the magnetic recording tape. Further, the ratio may be, for example, 18% or less, and particularly 16% or less in order to prevent the total thickness of the tape from increasing.

Here, by providing this deposition film layer A, it is possible to impart characteristics capable of suppressing a dimensional change due to temperature, humidity, and tension to the magnetic recording tape. The characteristics can be represented by the dimension stability (TDS: Transversal Dimensional stability). In particular, the above-mentioned characteristics can be evaluated by the total TDS (ppm) obtained by summing TDS (temperature and humidity) and TDS (tension). The TDS (temperature and humidity) means the dimension stability (TDS) against the change in temperature and humidity. The TDS (tension) means the dimension stability (TDS) against the tension. The magnetic recording tape according to the present technology favorably has a value of the total TDS of less than 300 ppm. Since the value of the total TDS is less than 300 ppm, the dimension stability is favorable. Note that the specific method of obtaining the total TDS will be described in an Example described below.

Further, also the Young's moduli (unit: GPa) in the tape longitudinal direction and width direction can be adopted as numerical values capable of evaluating the dimension stability of the tape. In particular, these Young's moduli are suitable for evaluating the dimension stability in the case where tension is applied to the tape. These Young's moduli can be measured using a tensile tester. As demonstrated by the experiment described below, since the magnetic recording tape according to the present technology has the Young's modulus in the longitudinal direction of the tape (tape longitudinal direction) of 14 GPa or more and the Young's modulus in the tape width direction of 15 GPa or more, the dimension stability is favorable.

Further, the deposition density correlates with the specific resistance value of the magnetic recording tape.

Specifically, as the deposition density increases, the specific resistance value decreases. In the case where the specific resistance value of the tape is too low (electric resistance is too low), static electricity in the environment is likely to be conducted to the magnetic head through the tape, which causes the magnetic head to break. In this regard, in the present technology, the upper limit of the appropriate deposition density is specified by the "specific resistance value". As demonstrated by the experiment described below, the magnetic recording tape according to the present technology has a deposition density such that the specific resistance value is $4.1 \times 10^{-6}$ $\Omega \cdot$m or less, and therefore, does not adversely affect the magnetic head.

(2-5) Back layer

The back layer 4 shown in Fig. 1 and the like plays a role of controlling friction generated when the tape T1 is caused to travel at high speed while facing the magnetic head, a role of preventing winding disorder, and the like. That is, the back layer 4 plays a basic role for causing the tape T1 to stably travel at a high speed.

The back layer 4 contains a binder and a non-magnetic powder. The back layer 4 may further contain, as necessary, at least one additive selected from a lubricant, a curing agent, an antistatic agent, and the like. The binder and the non-magnetic powder are similar to those in the case of the above-mentioned non-magnetic layer 2. By adding the antistatic agent, it is possible to prevent dust and dirt from adhering to this back layer 4.

The average particle size of the non-magnetic powder that can be contained in the back layer 4 is favorably 10 nm or more and 150 nm or less, and more favorably 15 nm or more and 110 nm or less. The average particle size of the non-magnetic powder is obtained in a way similar to that of the average particle size of the above-mentioned magnetic powder. The non-magnetic powder may include a non-magnetic powder having two or more particle size distributions.

The upper limit of the average thickness of the back layer 4 is favorably 0.6 $\mu$m or less. In the case where the upper limit of the average thickness of the back layer 4 is 0.6 $\mu$m or less, it is possible to maintain the travelling stability of the tape T1 in a recording/reproduction apparatus even if the average thickness of the tape T1 is 5.6 $\mu$m or less. The lower limit of the average thickness of the back layer 4 is not particularly limited, but is, for example, 0.2 $\mu$m or more. In the case where the lower limit is less than 0.2 $\mu$m, there is a possibility that the travelling stability of the tape T1 in a recording/reproduction apparatus is impaired.

The average thickness of the back layer 4 is obtained as follows. First, a tape T having a 1/2 inch width is prepared and cut into a length of 250 mm to prepare a sample. Next, the thickness of the sample is measured at five or more points using a laser hologage manufactured by Mitsutoyo Corporation, and the measured values are simply averaged (arithmetic average) to calculate an average value $t_T$ [$\mu$m] of the tape T1. Note that the measurement position is randomly selected from the sample.

Subsequently, the back layer 4 of the sample is removed with a solvent such as MEK (methyl ethyl ketone) and dilute hydrochloric acid. After that, the thickness of the sample is measured at five or more point using the above-mentioned laser hologage, and the measured values are simply averaged (arithmetic average) to calculate an average value $t_B$ [$\mu$m] of the tape T from which the back layer 4 has been removed. Note that the measurement position is randomly selected from the sample. After that, an average thickness tb [$\mu$m] of the back layer 4 is obtained using the following formula (4).

$$t_b\,[\mu m] = t_T\,[\mu m] - t_B\,[\mu m] \quad (4)$$

(3) Regarding basic layer structure of magnetic recording tape according to second embodiment

Fig. 2 shows a basic layer structure of a magnetic recording tape according to a second embodiment example. A reference symbol T2 shown in Fig. 2 indicates the magnetic recording tape according to the second embodiment example. Assumption is made that the total thickness of the tape T2 is 5.6 $\mu$m or less from the viewpoint of obtaining a magnetic recording tape having a higher recording capacity similarly to the tape 1 (see Fig. 1) according to the first embodiment example.

Further, since the material, composition, structure, form, function (role), and the like of each of the magnetic layer 1, the non-magnetic layer 2, the base layer 3, the deposition film layer A, and the back layer 4 constituting the tape T2 are similar to those of the above-mentioned first embodiment example (the tape T1), description thereof will be omitted to avoid duplication. Further, layers common to those of the first embodiment example (the tape T1) will be described below using the same reference symbols.

The tape T2 according to the second embodiment example includes the magnetic layer 1 having magnetism, the non-magnetic layer 2 located below the magnetic layer 1, an insulation layer B located below the non-magnetic layer 2, the deposition film layer A located below the insulation layer B, the base layer 3 located below the deposition film layer A, and the back layer 4 that is the lowermost layer in the order from the top (from the side facing a magnetic head during recording or reproduction). That is, the tape T2 has a basic layer structure including a total of six layers (see Fig. 2 again). Note that in addition to these six layers, another necessary layer can be freely provided to an appropriate place as necessary, e.g., a protective film layer or a lubricant layer may be further stacked on the magnetic layer 1 or a layer such as an intermediate layer may be interposed between the magnetic layer 1 and the base layer 3.

The tape T1 according to the above-mentioned first embodiment example has a configuration in which the deposition film layer A is provided between the base layer 3 and the back layer 4 (see Fig. 1 again). Meanwhile, in the tape T2 according to the second embodiment example, the deposition film layer A is provided between the base layer 3 and the non-magnetic layer 2 and the insulation layer B is provided between the deposition film layer A and the non-magnetic layer 2 (see Fig. 2).

(3-1) Insulation layer

In the tape T2 according to the second embodiment, the deposition film layer A having a configuration similar to that of the tape T1 is provided on the main surface of the base layer 3 on the side of the magnetic layer 1 by a method similar to that of the tape T1.

This configuration is improved by providing the insulation layer B between the deposition film layer A and the non-magnetic film 2 in order not to reduce the electric resistance on the side of the magnetic layer 1. This is because if the insulation layer B is not provided, the electric resistance on the side of the magnetic layer 1 becomes too low, a current easily flows, and thus, there is a possibility that the magnetic head is broken during recording or reproduction.

This insulation layer B can be formed by coating on the dried deposition film layer A. As an example, the insulation layer B is capable of employing a composition including a resin material and cyclohexane.

The thickness of this insulation layer B is desirably within the range of 0.3 $\mu$m to 0.6 $\mu$m. The insulation function is deteriorated in the case where the thickness of the insulation layer B is less than 0.3 $\mu$m, while the total thickness of the tape T2 increases in the case were the thickness of the insulation layer B exceeds 0.6 $\mu$m.

(4) Regarding example of method of producing magnetic recording tape according to present technology

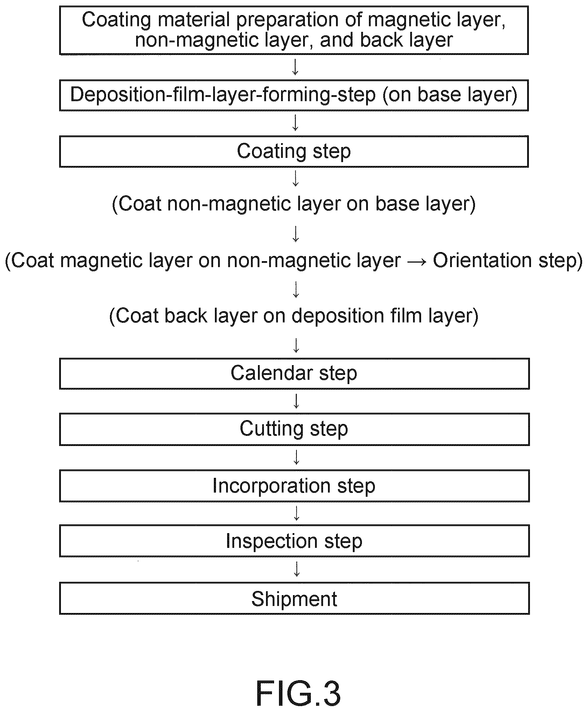

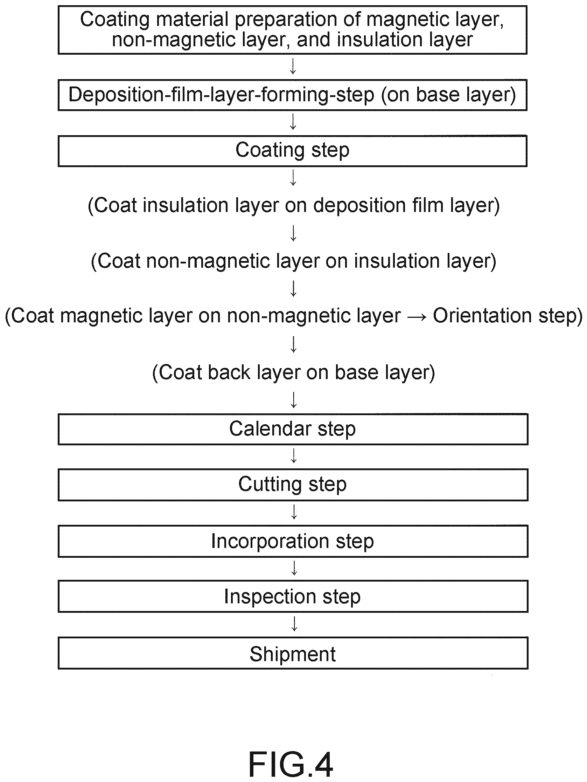

First, an example of the entire basis steps of the method of producing the tapes T1 and T2 having the above-mentioned configuration will be described with reference to Fig. 3 and Fig. 4.

First, Fig. 3 shows a flow chart of a production step in the case of the tape T1 (first embodiment example). In the case of the tape T1 having the layer structure shown in Fig. 1, coating materials for forming the respective layers of the magnetic layer 1, the non-magnetic layer 2, and the back layer 4, which are to be formed by coating, are prepared (coating material preparation step), and the deposition film layer A is formed on the base layer 3 (deposition-film-layer-forming-step).

Next, each of the coating materials prepared in advance is coated in the order of stacking (coating step). The coating material for forming a non-magnetic layer is coated on the surface of the base layer 3 opposite to the surface on which the deposition film layer A has been provided, and dried. Subsequently, the coating material for forming a magnetic layer is coated on the non-magnetic layer 2 and dried, and the magnetic powder is oriented to form the magnetic layer 1. After the orientation of the magnetic layer 1 is finished, the back layer 3 is formed by coating on the opposite surface of the deposition film layer A. As a result, the tape T1 including a total of five layers (see Fig. 1) is completed.

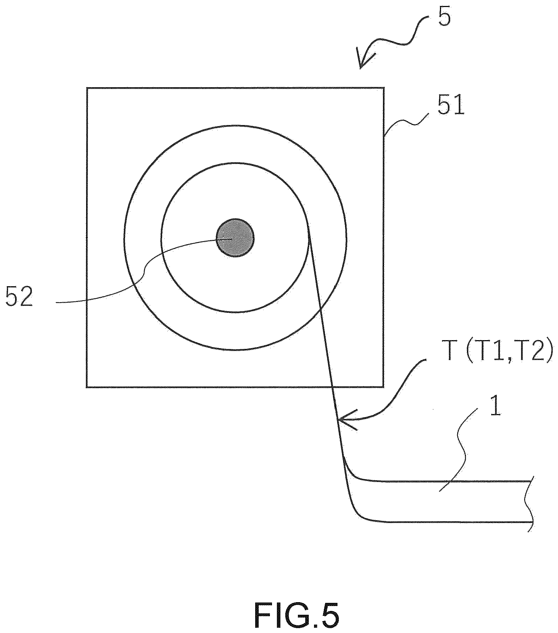

Subsequently, a calendar step, a curing step, a cutting step, a cut step, an incorporation step, and an inspection step are performed in the stated order, and then, a tape cartridge product (see Fig. 5) is shipped. The calendar step and subsequent steps will be described below in detail.

Next, Fig. 4 shows a flow chart of a production step in the case of the tape T2 (second embodiment example). In the case of the tape T2 having the layer structure including a total of six layers shown in Fig. 2, first, coating materials for forming the insulation layer B (see Fig. 2) in addition to the magnetic layer 1, the non-magnetic layer 2, and the back layer 4, which are to be formed by coating, are prepared (coating material preparation step).

Next, the deposition film layer A is formed on the base layer 3(deposition-film-layer-forming-step). Next, the prepared coating materials for forming the respective layers are coated on the deposition film layer A in order (coating step). Specifically, the coating material for forming an insulation layer is coated on the surface of the base layer 3 on which the deposition film layer A has been provided, and dried. Subsequently, the coating material for forming a non-magnetic layer is coated on the insulation layer B and dried. Next, the coating material for forming a magnetic layer is coated on the non-magnetic layer 2, the magnetic powder is oriented in a way similar that of the above-mentioned tape T1, and then the coating material is dried to form the magnetic layer 1. Finally, the coating material for forming a back layer is formed by coating on the opposite surface of the base layer 3. As a result, the tape T2 including a total of six layers (Fig. 2) is completed.

Subsequently, similarly to the above-mentioned tape T1, a calendar step, a curing step, a cutting step, a cut step, an incorporation step, and an inspection step are performed also on the tape T2, and a tape cartridge product (see Fig. 5) is shipped. Details of the calendar step and subsequent steps will be described below.

Hereinafter, each of the main steps relating to the production of the tapes T1 and T2 will be described in more detail. Note that also an example of the formulation composition of the coating material for forming a film to be used is shown.

(4-1) Coating material preparation step

First, a non-magnetic powder, a binder, a lubricant, and the like are kneaded and/or dispersed in a solvent to prepare the "coating material for forming a non-magnetic layer". Next, a magnetic powder, a binder, a lubricant, and the like are kneaded and/or dispersed in a solvent to prepare the "coating material for forming a magnetic layer". Next, a binder, a non-magnetic powder, and the like are kneaded and/or dispersed in a solvent to prepare the "coating material for forming a back layer". Further, in the case where the tape T2 according to the second embodiment is produced, the "coating material for forming an insulation layer" having a composition including an insulation material and a resin material is prepared.

For the coating material for forming a magnetic layer, the coating material for forming a non-magnetic layer, and the coating material for forming a back layer described above, for example, the following solvents can be used. For the preparation of the coating material for forming an insulation layer in addition to these coating materials, the following dispersion apparatus and kneading apparatus can be used.

Examples of the solvent used for preparation of the above-mentioned coating materials include ketone solvents such as acetone, methyl ethyl ketone, methyl isobutyl ketone, and cyclohexanone, alcohol solvents such as methanol, ethanol, and propanol, ester solvents such as methyl acetate, ethyl acetate, butyl acetate, propyl acetate, ethyl lactate, and ethylene glycol acetate, ether solvents such as diethylene glycol dimethyl ether, 2-ethoxyethanol, tetrahydrofuran, and dioxane, aromatic hydrocarbon solvents such as benzene, toluene, and xylene, and halogenated hydrocarbon solvents such as methylene chloride, ethylene chloride, carbon tetrachloride, chloroform, and chlorobenzene. These may be used alone or appropriately mixed and used.

As the above-mentioned kneading apparatus used for the preparation of the coating materials, for example, a kneading apparatus such as a continuous twin-screw kneader, a continuous twin-screw kneader capable of diluting in multiple stages, a kneader, a pressure kneader, and a roll kneader can be used. However, the present technology is not particularly limited to these apparatuses. Further, as the above-mentioned dispersion apparatus used for the preparation of the coating materials, for example, a dispersion apparatus such as a roll mill, a ball mill, a horizontal sand mil, a vertical sand mil, a spike mill, a pin mill, a tower mill, a pearl mill (e.g., "DCP mill" manufactured by Eirich Co., Ltd.), a homogenizer, and an ultrasonic disperser can be used. However, the present technology is not particularly limited to these apparatuses.

<Step of preparing coating material for forming magnetic layer>

For example, the "coating material for forming a magnetic layer" can be prepared, for example, as follows. First, a first composition having the following formulation is kneaded with an extruder. Next, the kneaded first composition and a second composition having the following formulation are added to a stirring tank including a dispersion device, and premixed. Subsequently, sand mill mixing is further performed and filter treatment is performed to prepare the coating material for forming a magnetic layer.

(First composition)

- Powder (hexagonal plate shape, aspect ratio 2.8, particle volume 1950 nm$^3$) of barium ferrite ($BaFe_{12}O_{19}$) particles: 100 parts by mass
- Vinyl chloride resin (cyclohexanone solution 30% by mass): 10 parts by mass (degree of polymerization 300, Mn=10,000, containing $OSO_3K$=0.07 mmol/g and secondary OH=0.3 mmol/g as polar groups.)
- Aluminum oxide powder: 5 parts by mass ($\alpha$-$Al_2O_3$, average particle size 0.2 $\mu$m)
- Carbon black: 2 parts by mass (manufactured by Tokai Carbon Co., Ltd., product name: SEAST TA)

(Second composition)

- Vinyl chloride resin: 1.1 parts by mass
  (Resin solution: resin content 30% by mass, cyclohexanone 70% by mass)
- n-butyl stearate: 2 parts by mass
- Methyl ethyl ketone: 121.3 parts by mass
- Toluene: 121.3 parts by mass
- Cyclohexanone: 60.7 parts by mass

Finally, polyisocyanate (product name: Coronate L, manufactured by Nippon Polyurethane Co., Ltd.): 4 parts by mass and myristic acid: 2 parts by mass are added, as curing agents, to the coating material for forming a magnetic layer prepared as described above.

<Step of preparing coating material for non-magnetic layer>

Next, for example, the step of preparing the "coating material for a non-magnetic layer" can be performed, for example, as follows. First, a third composition having the following formulation is kneaded with an extruder. Next, the kneaded third composition and a fourth composition having the following formulation are added to a stirring tank including a dispersion device, and premixed. Subsequently, sand mill mixing is further performed and filter treatment is performed to prepare the coating material for forming a non-magnetic layer.

(Third composition)

- Acicular iron oxide powder: 100 parts by mass
  ($\alpha$-Fe$_2$O$_3$, average major axis length 0.15 $\mu$m)
- Vinyl chloride resin: 55.6 parts by mass
  (Resin solution: resin content 30% by mass, cyclohexanone 70% by mass)
- Carbon black: 10 parts by mass
  (Average particle size 20 nm)

(Fourth composition)

- Polyurethane resin UR8200 (manufactured by TOYOBO CO., LTD.): 18.5 parts by mass
- n-butyl stearate 2 parts by mass
- Methyl ethyl ketone: 108.2 parts by mass
- Toluene: 108.2 parts by mass
- Cyclohexanone: 18.5 parts by mass

Finally, polyisocyanate (product name: coronate L, manufactured by Nippon Polyurethane Co., Ltd.): 4 parts by mass and myristic acid: 2 parts by mass are added, as curing agents, to the coating material for forming a non-magnetic layer prepared as described above.

<Step of preparing coating material for forming back layer>

The coating material for forming a back layer can be prepared, for example, as follows. The following raw materials are mixed in a stirring tank including a dispersion device and filter treatment is performed to prepare the coating material for forming a back layer.

- Powder (average particle size 20 nm) of carbon black particles: 90 parts by mass
- Powder (average particle size 270 nm) of carbon black particles: 10 parts by mass
- Polyester polyurethane: 100 parts by mass
  (manufactured by Nippon Polyurethane Co., Ltd., product name: N-2304)

- Methyl ethyl ketone: 500 parts by mass
- Toluene: 400 parts by mass
- Cyclohexanone: 100 parts by mass

Note that the amount of the powder (average particle size 20 nm) of carbon black particles may be 80 parts by mass, and the amount of the same powder (average particle size 270 nm) may be 20 parts by mass.

<Step of preparing coating material for forming insulation layer>

In the case of producing the tape T2 (see Fig. 2) according to the above-mentioned second embodiment, the coating material for forming an insulation layer is prepared. Specifically, the following composition example can be adopted.

- Polyester resin: 1.0% by mass
- Cyclohexane: 99.0% by mass

As described above, coating materials for the respective layers to be formed by coating can be prepared.

(4-2) Deposition-film-layer-forming-step

For example, a deposition film layer can be formed using a roll-to-roll type vacuum deposition apparatus. The vacuum deposition apparatus includes, in a vacuum chamber in a high vacuum state, a cooling scan that rotates while being cooled, and a deposition source located at a position facing the cooling scan. The deposition source has a configuration in which a metal material is housed in a container such as a crucible. A film constituting the base layer 3 is configured to continuously travel via the cooling scan. An electron beam accelerated and emitted from an electron beam generation source is applied to the inside of the crucible to heat and evaporate the above-mentioned metal material. The metal material thus heated and evaporated is deposited on the above-mentioned film that travel along the cooling scan to form the deposition film layer A.

(4-3) Coating step

Next, the prepared coating material for forming a non-magnetic layer is coated on one main surface of the base layer 3 and dried to form the non-magnetic layer 2 having the average thickness of 1.0 $\mu$m to 1.1 $\mu$m, for example. Subsequently, the prepared coating material for forming a magnetic layer is coated on this non-magnetic layer 2 to form the magnetic layer 1 having the average thickness of 40 nm to 100 nm, for example. Then, after forming the magnetic layer 1 by coating, the following orientation step is performed on this magnetic layer 1 and the magnetic layer 1 is dried immediately thereafter. Then, the prepared coating material for forming a back layer is coated on the main surface of the deposition film layer A and dried.

(4-4) Orientation step

Before drying the coated and formed magnetic layer 1, the magnetic field of the magnetic powder in the magnetic layer 1 is oriented using, for example, a permanent magnet. For example, the magnetic field of the magnetic powder in the magnetic layer 1 is oriented in the perpendicular direction (i.e., tape thickness direction) (perpendicular orientation) by a solenoid coil. Alternatively, the magnetic field of the magnetic powder may be oriented in the tape travelling direction (tape longitudinal direction) by a solenoid coil. Note that perpendicular orientation is desirable in terms of increasing he recording density of the magnetic layer 1, but in-plane orientation (longitudinal orientation) may be adopted in some cases.
The degree of orientation (squareness ratio) can be adjusted by, for example, adjusting the strength (e.g., two to three times the coercive force of the magnetic powder) of the magnetic field emitted from the solenoid coil, adjusting the solid content of the coating material for forming a magnetic layer, adjusting the drying conditions (drying temperature and drying time), or a combination of the adjustments. Further, the degree of orientation can be adjusted also by adjusting the time for the magnetic powder to be oriented in the magnetic field. For example, in order to increase the degree of orientation, it is favorable to improve the dispersion state of the magnetic powder in the coating material. Further, a method of magnetizing the magnetic powder before entering the orientation device for the orientation in the perpendicular direction is also effective, and this method may be used. By performing such adjustment, the degree of orientation in the perpendicular direction (thickness direction of the magnetic tape) and/or longitudinal direction (length direction of the magnetic tape) can be set to a desired value.

(4-5) Calendar step

Next, calendar treatment is performed to smooth the surface of the magnetic layer 1. This calendar step is a step of performing mirror finishing using a multistage roll apparatus generally called a calendar. While sandwiching the tape T1 or T2 between opposing metal rolls, necessary temperature and pressure are applied to finish the surface of the magnetic layer 1 to be smooth.

(4-6) Cutting step

The wide magnetic recording tape T1 or T2 obtained as described above is cut into, for example, a tape width according to the standard of the type of the tape. For example, the tape is cut into a 1/2 inch (12.65 mm) width and wound on a predetermined roll. As a result, it is possible to obtain the long magnetic recording tape T1 or T2 having a target tape width. In this cutting step, necessary inspection may be performed.

(4-7) Incorporation step

The magnetic recording tape T (T1 or T2) cut into a predetermined width is cur into a predetermined length according to the type to obtain a form of a cartridge tape 5 as shown in Fig. 5. Specifically, a magnetic recording tape having a predetermined length is wound on a reel 52 provided in a cartridge case 51 and housed.

(4-8) Inspection step, (4-9) Shipment

After the final product inspection step, the product is packed and shipped. In the inspection step, for example, the quality of the magnetic recording tape is checked by the pre-shipment inspection of the electromagnetic conversion characteristics, travelling durability, and the like.
The present technology may take the following configurations.

(1) A magnetic recording tape, including:

a magnetic layer; a non-magnetic layer; a base layer; and a back layer in the stated order, in which
the magnetic recording tape has a total thickness of 5.6 $\mu$m or less,
a deposition film layer formed of a metal or an oxide thereof is provided on a lower-layer side of the non-magnetic layer,
a Young's modulus in a longitudinal direction of the magnetic recording tape is 14 GPa or more, and
a Young's modulus in a width direction of the magnetic recording tape is 15 GPa or more.

(2) The magnetic recording tape according to (1), in which
the deposition film layer is formed between the base layer and the back layer.
(3) The magnetic recording tape according to (1) or (2), in which
the deposition film layer has a thickness of 500 nm or less.
(4) The magnetic recording tape according to any one of (1) to (3), in which
total TDS obtained by summing TDS (temperature and humidity) and TDS (tension) is less than 300 ppm.
(5) The magnetic recording tape according to any one of (1) to (4), in which
the deposition film layer is formed of a material selected from cobalt, aluminum oxide, silicon, copper, and chromium.
(6) The magnetic recording tape according to any one of (1) to (5), in which
the deposition film layer has a deposition density such that a specific resistance value of the magnetic recording tape is $4.1 \times 10^{-6}$ $\Omega \cdot$m or less.
(7) The magnetic recording tape according to any one of (1) to (6), in which
the deposition film layer is formed directly on the base layer, and
an insulation layer is further provided between the deposition film layer and the non-magnetic layer.
(8) The magnetic recording tape according to any one of (1) to (7), in which
the magnetic layer has a track density of 10,000 track/in. or more in the width direction of the magnetic recording tape.
(9) The magnetic recording tape according to any one of (1) to (8), in which
the magnetic recording tape is caused to travel at a speed of 4 m/sec or more.
(10) The magnetic recording tape according to any one of (1) to (9), in which
the base layer has a thickness of 3.6 $\mu$m or less.
(11) The magnetic recording tape according to any one of (1) to (10), in which
the deposition film layer is formed by an electron beam deposition method.

(12) The magnetic recording tape according to any one of (1) to (11), in which
the degree of perpendicular orientation in a perpendicular direction of the magnetic recording tape is 60% or more.
(13) The magnetic recording tape according to any one of (1) to (12), in which
a ratio of the degree of perpendicular orientation in a perpendicular direction of the magnetic recording tape to the degree of orientation in the longitudinal direction of the magnetic recording tape is 1.8 or more.
(14) A magnetic recording tape cartridge, including:
the magnetic recording tape according to any one of (1) to (13) above housed in a case while being wound on a reel.
(15) A method of producing a magnetic recording tape, including:
obtaining a magnetic recording tape having a total thickness of 5.6 μm or less by performing at least

a step of forming at least a magnetic layer on one surface side of a base layer, and
a deposition-film-layer-forming-step of forming a deposition film layer on a lower-layer side of the magnetic layer, the deposition film layer being formed of a metal or an oxide thereof and having a film thickness of 350 to 500 nm, a Young's modulus in a longitudinal direction of the magnetic recording tape being 14 GPa or more, a Young's modulus in a width direction of the magnetic recording tape being 15 GPa or more.

[16] The method of producing a magnetic recording tape according to (15), in which
the deposition-film-layer-forming-step is performed by an electron beam deposition method.

(Example)

The present inventors prepared magnetic recording tape each provided with a deposition film layer (see the reference symbol A in Fig. 1 and Fig. 2) (Examples 1 to 10 and Comparative Examples 1 to 5). In the magnetic recording tapes according to Examples 1 to 5, perpendicular orientation treatment has been performed on a magnetic layer. The magnetic recording tapes according to Examples 6 to 10 are the same as the magnetic recording tapes according to Examples 1 to 5 except that no perpendicular orientation treatment has been performed on the magnetic layer. In the magnetic recording tapes according to Comparative Examples 1 to 5, no perpendicular orientation treatment has been performed on the magnetic layer.

The Young's moduli of the magnetic recording tapes according to Examples 1 to 10 and Comparative Examples 1 to 5 in the tape longitudinal direction and the tape width direction were measured, the total TDS (TDS value obtained by summing the temperature TDS, the humidity TDS, and the tension TDS) was calculated, SNR (dB) was evaluated, and the deposition density was measured. Further, the degree of orientation of each of these magnetic recording tapes in the perpendicular direction and the longitudinal direction were measured.

The Young's modulus (temperature and humidity) was measured using a tensile tester (TCM-200CR manufactured by MNB). In the measurement, a sample tape having a 1/2 inch width was used.

The TDS (temperature·humidity) can be obtained by measuring the dimensional change of the sample tape placed in a constant temperature bath in the case where the temperature and humidity were changed from temperature 10°C and humidity 10% (relative humidity) to temperature 29°C and humidity 80% (relative humidity) using a laser displacement meter (laser displacement meter LS-7000 manufactured by KEYENCE CORPORATION.) and the following formula (5). The TDS (tension) can be obtained by measuring the dimensional change in the case where the tension is changed from 0.5 N to 0.7 N and the following formula (6). Then, the TDS (total) can be obtained by using the following formula (7).

$$\cdot\text{TDS (temperature·humidity) ppm} = (\text{tape width at temperature 29°C and humidity 80\%} - \text{tape width at temperature 10°C and humidity 10\%}) / (\text{tape width at temperature 10°C and humidity 10\%}) \quad (5)$$

$$\cdot\text{TDS (tension) ppm} = (\text{tape width at tension 0.5 N} - \text{tape width at tension 0.7 N}) / (\text{tape width at tension 0.5 N}) \quad (6)$$

$$\cdot \text{TDS (total) ppm = TDS (temperature and humidity)}$$

$$\text{ppm + TDS (tension) ppm} \quad (7)$$

Regarding the SNR evaluation, SNR was obtained by causing the sample tape to travel using a commercially available tape travelling system manufactured by Mountain Engineering II, INC. and performing recording/reproduction using a magnetic head of a 1/2 inch fixed head drive. Next, the obtained SNR was judged in accordance with the following criteria. A evaluation: SNR is within -1.5 dB with respect to a reference tape (MSRT) of the LTO6 media. B evaluation: SNR is within -2.5 dB with respect to a reference tape (MSRT) of the LTO6 media. C evaluation: SNR exceeds - 2.5 dB with respect to a reference tape (MSRT) of the LTO6 media.

The deposition film layer was formed using the above-mentioned roll-to-roll type vacuum deposition apparatus. The vacuum deposition apparatus includes, in a vacuum chamber in a high vacuum state, a cooling scan that rotates while being cooled, and a deposition source located at a position facing the cooling scan. In the deposition source, a metal material is housed in a crucible. A film constituting a base layer was caused to continuously travel via the cooling scan. An electron beam accelerated and emitted from an electron beam generation source was applied to the inside the crucible to heat and evaporate the metal material formed of Co (Example 1), $Al_2O_3$ (Example 2), Si (Example3), Cu (Example 4), Cr (Example 5), CuO (Comparative Example 1), Cu (Comparative Example 2), CuO (Comparative Example 3), or Al (Comparative Example 4). Each of the metal materials thus heated and evaporated was deposited on the above-mentioned film that travels along the cooling scan to form a deposition film layer. Note that Comparative Example 5 is a test example of a tape in which a deposition film layer is not formed.

The deposition density of the deposition film layer can be represented by the electric resistance value. The electric resistance value has been calculated by using a Loresta measuring device and performing measurement by a four-terminal method.

The degree of orientation in the perpendicular direction was measured as follows.

First, a measurement sample was cut from each of the magnetic recording tapes, and the M-H loop of the entire measurement sample was measured in the perpendicular direction (thickness direction) of the tape using VSM. Next, acetone, ethanol, or the like is used to wipe the coating film (the non-magnetic layer, the magnetic layer, and the back layer), thereby leaving only the base film layer and the deposition film layer to obtain a sample for background correction. The M-H loop of the sample for background correction was measured in the perpendicular direction (tape perpendicular direction) of the sample for background correction using VSM. After that, the M-H loop of the sample for background correction was subtracted from the M-H loop of the entire measurement sample to obtain the M-H loop after background correction. The saturation magnetization Ms (emu) and the residual magnetization Mr (emu) of the obtained M-H loop are substituted into the following formula to calculate the degree of perpendicular orientation S1 (%). Note that the above-mentioned measurement of the M-H loop is performed at 25°C. Further, "demagnetizing field correction" when measuring the M-H loop in the perpendicular direction of the tape is not performed.

Degree of perpendicular orientation

$$\text{S1}(\%) = (\text{Mr/Ms}) \times 100$$

Further, the degree of orientation in the longitudinal direction was measured in a way similar to that of the degree of perpendicular orientation except that the M-H loop of the entire measurement sample and the M-H loop of the sample for background correction were measured in the tape longitudinal direction (travelling direction).

The results of measurement, calculation, and evaluation described above are shown in the following "Table 1".

[Table 1]

| Example No. | Tape total thickness ($\mu$m) | Base layer thickness ($\mu$m) | Deposition film layer thickness (nm) | Deposition film layer metal material | Ratio of deposition film layer to base thickness (%) | Deposition film layer deposition density (specific resistance value) ($\Omega \cdot$m) | Deposition film layer deposition method | Insulation layer ($\mu$m) | Degree of orientation | | | Young's modulus | | Evaluation | | |
|---|---|---|---|---|---|---|---|---|---|---|---|---|---|---|---|---|
| | | | | | | | | | Tape perpendicular direction | Tape longitudinal direction | Ratio of degree of orientation (perendicular direction/ longitudinal direction) | Tape longitudinal direction (GPa) | Tape width direction (GPa) | TDS (Total) (ppm) | SNR (dB) | SNR evaluation |
| Example 1 | 5.1 | 3.2 | 350 | Co | 10.9 | $2.9 \times 10^{-7}$ | Electron beam deposition | None | 65 | 35 | 1.86 | 14.3 | 15.8 | 298 | -1.1 | A |
| Example 2 | 5.2 | 3.2 | 450 | $Al_2O_3$ | 14.1 | $4.1 \times 10^{-6}$ | Electron beam deposition | None | 70 | 29 | 2.41 | 15.0 | 16.0 | 270 | -1.2 | A |
| Example 3 | 5.5 | 3.2 | 400 | Si | 12.5 | $3.5 \times 10^{-7}$ | Electron beam deposition | 0.3 | 75 | 23 | 3.26 | 14.5 | 16.5 | 290 | -1.2 | A |
| Example 4 | 5.3 | 3.2 | 500 | Cu | 15.6 | $3.0 \times 10^{-8}$ | Electron beam deposition | None | 80 | 21 | 3.81 | 15.7 | 17.2 | 290 | -1.3 | A |
| Example 5 | 5.3 | 3.3 | 400 | Cr | 12.1 | $3.1 \times 10^{-7}$ | Electron beam deposition | None | 85 | 18 | 4.72 | 14.5 | 15.9 | 285 | -1.2 | A |
| Example 6 | 5.1 | 3.2 | 350 | Co | 10.9 | $2.9 \times 10^{-7}$ | Electron beam deposition | None | 56 | 45 | 1.24 | 14.3 | 15.8 | 298 | -1.7 | B |

| Example No. | Tape total thickness ($\mu$m) | Base layer thickness ($\mu$m) | Deposition film layer thickness (nm) | Deposition film layer metal material | Ratio of deposition film layer to base thickness (%) | Deposition film layer deposition density (specific resistance value) ($\Omega \cdot m$) | Deposition film layer deposition method | Insulation layer ($\mu$m) | Degree of orientation Tape perpendicular direction | Degree of orientation Tape longitudinal direction | Degree of orientation Ratio of degree of orientation (perendicular direction/ longitudinal direction) | Young's modulus Tape longitudinal direction (GPa) | Young's modulus Tape width direction (GPa) | Evaluation TDS (Total) (ppm) | Evaluation SNR (dB) | Evaluation SNR evaluation |
|---|---|---|---|---|---|---|---|---|---|---|---|---|---|---|---|---|
| Example 7 | 5.2 | 3.2 | 450 | $Al_2O_3$ | 14.1 | $4.1 \times 10^{-6}$ | Electron beam deposition | None | 56 | 45 | 1.24 | 15.0 | 16.0 | 270 | -1.8 | B |
| Example 8 | 5.5 | 3.2 | 400 | Si | 12.5 | $3.5 \times 10^{-7}$ | Electron beam deposition | 0.3 | 56 | 45 | 1.24 | 14.5 | 16.5 | 290 | -1.8 | B |
| Example 9 | 5.3 | 3.3 | 500 | Cu | 15.6 | $3.0 \times 10^{-8}$ | Electron beam deposition | None | 56 | 45 | 1.24 | 15.7 | 17.2 | 290 | -2 | B |
| Example 10 | 5.3 | 3.3 | 400 | Cr | 12.1 | $3.1 \times 10^{-7}$ | Electron beam deposition | None | 56 | 45 | 1.24 | 14.5 | 15.9 | 285 | -1.9 | B |
| Comparative Example 1 | 5.7 | 4.0 | 150 | CuO | 3.8 | $6.1 \times 10^{-6}$ | Electron beam deposition | None | 56 | 45 | 1.24 | 9.8 | 10.4 | 500 | -2.7 | C |
| Comparative Example 2 | 5.4 | 3.6 | 250 | Cu | 6.9 | $7.8 \times 10^{-8}$ | Electron beam deposition | None | 56 | 45 | 1.24 | 11.0 | 12.5 | 432 | -1.7 | B |

EP 3 742 445 A1

| Example No. | Tape total thickness ($\mu$m) | Base layer thickness ($\mu$m) | Deposition film layer thickness (nm) | Deposition film layer metal material | Ratio of deposition film layer to base thickness (%) | Deposition film layer deposition density (specific resistance value) ($\Omega\cdot$m) | Deposition film layer deposition method | Insulation layer ($\mu$m) | Degree of orientation | | | Young's modulus | | Evaluation | | |
|---|---|---|---|---|---|---|---|---|---|---|---|---|---|---|---|---|
| | | | | | | | | | Tape perpendicular direction | Tape longitudinal direction | Ratio of degree of orientation (perendicular direction/ longitudinal direction) | Tape longitudinal direction (GPa) | Tape width direction (GPa) | TDS (Total) (ppm) | SNR (dB) | SNR evaluation |
| Comparative Example 3 | 5.4 | 3.2 | 600 | CuO | 18.8 | 6.0x10⁻⁷ | Electron beam deposition | None | 56 | 45 | 1.24 | 9.0 | 10.4 | 530 | -3 | C |
| Comparative Example 4 | 5.5 | 3.6 | 300 | Al | 8.3 | 2.0x10⁻⁷ | Electron beam deposition | None | 56 | 45 | 1.24 | 10.3 | 12.0 | 480 | -1.8 | B |
| Comparative Example 5 | 5.2 | 3.6 | None | - | - | - | - | None | 56 | 45 | 1.24 | 6.5 | 8.0 | 680 | -1.6 | C |

In any of the magnetic recording tapes according to Examples 1 to 10, the Young's modulus in the longitudinal direction (tape longitudinal direction) of the tape was 14 GPa or more and the Young's modulus in the tape width direction was 15 GPa or more. Further, in any of the magnetic recording tapes according to Examples 1 to 10, the TDS (total) was less than 300 ppm. For this reason, it can be seen that each of the magnetic recording tapes according to Examples 1 to 10 has favorable dimension stability.

Meanwhile, in any of the magnetic recording tapes according to Comparative Examples 1 to 5, the Young's modulus in the longitudinal direction (tape longitudinal direction) of the tape was less than 14 GPa and the Young's modulus in the tape width direction was less than 15 GPa. Further, in any of the magnetic recording tapes according to Comparative Examples 1 to 5, the TDS (total) was 300 ppm or more. For this reason, it can be seen that none of the magnetic recording tapes according to Comparative Examples 1 to 5 have favorable dimension stability.

From the results described above, it can be seen that the magnetic recording tape according to the present technology has favorable dimension stability.

Further, from the comparison between the magnetic recording tapes according to Examples 1 to 5 and the magnetic recording tape according to Examples 6 to 10, it can be seen that SNR can be evaluated as A by performing perpendicular orientation treatment and the perpendicular orientation treatment does not affect the dimension stability. The evaluation results of SNR of Comparative Examples 1 to 5 were all B or C.

The total thickness of each of the tapes according to Examples is 5.6 $\mu$m or less, the thickness of the base layer is 3.3 $\mu$m or less, and the thickness of the deposition film layer is 500 nm or less. Further, the deposition density in Examples 1 to 5 is $4.1 \times 10^{-6}$ $\Omega \cdot$m or less in terms of specific resistance value.

Comparative Example 5 is a magnetic recording tape having a layer configuration according to the first embodiment and having no deposition film layer. That is, Comparative Example 5 is a magnetic recording tape having a four-layer structure of a magnetic layer, a non-magnetic layer, a base layer, and a back layer. In this Comparative Example 5, the Young's moduli in the longitudinal direction and the width direction are considerably lower (approximately 50%) than those in Examples 1 to 5, and the TDS (total) exceeds 600 ppm and is closes to 700 ppm (see Table 1).

As described above, the magnetic recording tapes according to Examples 1 to 10 are each a magnetic recording tape capable of effectively suppressing or preventing the change in tape dimension, particularly, dimensional change in the tape width direction, even in the case where tension is applied during tape travelling or there is a change in temperature·humidity, as can be seen also from the Young's modulus and evaluation of the TDS (total).

Reference Signs List

1 magnetic layer
2 non-magnetic layer
3 base layer
4 back layer
5 tape cartridge
51 cartridge case
52 reel
A deposition film layer
B insulation layer
T1 magnetic recording tape (first embodiment example)
T2 magnetic recording tape (second embodiment example)

**Claims**

1. A magnetic recording tape, comprising:

   a magnetic layer; a non-magnetic layer; a base layer; and a back layer in the stated order, wherein
   the magnetic recording tape has a total thickness of 5.6 $\mu$m or less,
   a deposition film layer formed of a metal or an oxide thereof is provided on a lower-layer side of the non-magnetic layer,
   a Young's modulus in a longitudinal direction of the magnetic recording tape is 14 GPa or more, and
   a Young's modulus in a width direction of the magnetic recording tape is 15 GPa or more.

2. The magnetic recording tape according to claim 1, wherein

the deposition film layer is formed between the base layer and the back layer.

3. The magnetic recording tape according to claim 1, wherein
   the deposition film layer has a thickness of 500 nm or less.

4. The magnetic recording tape according to claim 1, wherein
   total TDS obtained by summing TDS (temperature and humidity) and TDS (tension) is less than 300 ppm.

5. The magnetic recording tape according to claim 1,
   the deposition film layer is formed of a material selected from cobalt, aluminum oxide, silicon, copper, and chromium.

6. The magnetic recording tape according to claim 1, wherein
   the deposition film layer has a deposition density such that a specific resistance value of the magnetic recording tape is $4.1 \times 10^{-6}$ $\Omega \cdot$m or less.

7. The magnetic recording tape according to claim 1, wherein
   the deposition film layer is formed directly on the base layer, and
   an insulation layer is further provided between the deposition film layer and the non-magnetic layer.

8. The magnetic recording tape according to claim 1, wherein
   the magnetic layer has a track density of 10,000 track/in. or more in the width direction of the magnetic recording tape.

9. The magnetic recording tape according to claim 1, wherein
   the magnetic recording tape is caused to travel at a speed of 4 m/sec or more.

10. The magnetic recording tape according to claim 1, wherein
    the base layer has a thickness of 3.6 $\mu$m or less.

11. The magnetic recording tape according to claim 1, wherein
    the deposition film layer is formed by an electron beam deposition method.

12. The magnetic recording tape according to claim 1, wherein
    the degree of perpendicular orientation in a perpendicular direction of the magnetic recording tape is 60% or more.

13. The magnetic recording tape according to claim 1, wherein
    a ratio of the degree of perpendicular orientation in a perpendicular direction of the magnetic recording tape to the degree of orientation in the longitudinal direction of the magnetic recording tape is 1.8 or more.

14. A magnetic recording tape cartridge, comprising:
    the magnetic recording tape according to claim 1 housed in a case while being wound on a reel.

15. A method of producing a magnetic recording tape, comprising:

    obtaining a magnetic recording tape having a total thickness of 5.6 $\mu$m or less by performing at least

    a step of forming at least a magnetic layer on one surface side of a base layer, and
    a deposition-film-layer-forming-step of forming a deposition film layer on a lower-layer side of the magnetic layer, the deposition film layer being formed of a metal or an oxide thereof and having a film thickness of 350 to 500 nm,

    a Young's modulus in a longitudinal direction of the magnetic recording tape being 14 GPa or more, a Young's modulus in a width direction of the magnetic recording tape being 15 GPa or more.

16. The method of producing a magnetic recording tape according to claim 15, wherein
    the deposition-film-layer-forming-step is performed by an electron beam deposition method.

(Top)

T 1

1 : Magnetic layer

2 : Non-magnetic layer

3 : Base layer

A : Deposition film layer
4 : Back layer

(Bottom)

# FIG.1

(Top)

T 2

1 : Magnetic layer

2 : Non-magnetic layer

B : Insulation layer

A : Deposition film layer

3 : Base layer

4 : Back layer

(Bottom)

# FIG.2

Coating material preparation of magnetic layer, non-magnetic layer, and back layer

↓

Deposition-film-layer-forming-step (on base layer)

↓

Coating step

↓

(Coat non-magnetic layer on base layer)

↓

(Coat magnetic layer on non-magnetic layer → Orientation step)

↓

(Coat back layer on deposition film layer)

↓

Calendar step

↓

Cutting step

↓

Incorporation step

↓

Inspection step

↓

Shipment

# FIG.3

Coating material preparation of magnetic layer, non-magnetic layer, and insulation layer

↓

Deposition-film-layer-forming-step (on base layer)

↓

Coating step

↓

(Coat insulation layer on deposition film layer)

↓

(Coat non-magnetic layer on insulation layer)

↓

(Coat magnetic layer on non-magnetic layer → Orientation step)

↓

(Coat back layer on base layer)

↓

Calendar step

↓

Cutting step

↓

Incorporation step

↓

Inspection step

↓

Shipment

# FIG.4

FIG.5

<table>
<tr><td colspan="2"><strong>INTERNATIONAL SEARCH REPORT</strong></td><td>International application No.<br>PCT/JP2018/042737</td></tr>
</table>

**A. CLASSIFICATION OF SUBJECT MATTER**
Int.Cl. G11B5/738(2006.01)i, G11B5/78(2006.01)i

According to International Patent Classification (IPC) or to both national classification and IPC

**B. FIELDS SEARCHED**

Minimum documentation searched (classification system followed by classification symbols)
Int.Cl. G11B5/738, G11B5/78

Documentation searched other than minimum documentation to the extent that such documents are included in the fields searched
Published examined utility model applications of Japan 1922–1996
Published unexamined utility model applications of Japan 1971–2019
Registered utility model specifications of Japan 1996–2019
Published registered utility model applications of Japan 1994–2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-237025 A (TORAY INDUSTRIES, INC.) 23 August 2002, paragraphs [0031]-[0035], [0044]-[0049], table 1 (Family: none) | 1-16 |
| Y | WO 2017/195866 A1 (SONY CORPORATION) 16 November 2017, paragraphs [0022], [0024], [0116], [0139], fig. 1, 2 (Family: none) | 1-16 |
| Y | JP 2006-120213 A (MATSUSHITA ELECTRIC INDUSTRIAL CO., LTD.) 11 May 2006, paragraph [0034], fig. 1 (Family: none) | 1-6, 8-16 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16.01.2019 | Date of mailing of the international search report<br>29.01.2019 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2018/042737 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2005-196944 A (TORAY INDUSTRIES, INC.) 21 July 2005, claims 1-4 (Family: none) | 4 |
| Y | WO 2016/079971 A1 (SONY CORPORATION) 26 May 2016, paragraph [0103] & US 2017/0249966 A1, paragraph [0204] | 8 |
| Y | JP 2017-139043 A (FUJIFILM CORPORATION) 10 August 2017, paragraphs [0073], [0074] & US 2017/0178677 A1, paragraphs [0130]-[0133] | 9, 14 |
| Y | JP 2004-213775 A (FUJI PHOTO FILM CO., LTD.) 29 July 2004, paragraph [0091] & US 2004/0131892 A1, paragraphs [0147]-[0149] & EP 1434199 A1 | 12 |
| Y | JP 2001-344727 A (SONY CORPORATION) 14 December 2001, claims 1, 2 (Family: none) | 13 |
| Y | JP 61-085618 A (SONY CORPORATION) 01 May 1986, claims (Family: none) | 16 |

Form PCT/ISA/210 (continuation of second sheet) (January 2015)

**EP 3 742 445 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11339250 A